# DEMANDE DE BREVET EUROPEEN

(11) **EP 2 149 626 A1**
(43) Date de publication de la demande: **03.02.2010**
(21) Numéro de dépôt: 09166494.6
(22) Date de dépôt: 27.07.2009
(51) Int. Cl.: C25B 11/02, C25B 9/20

(54) **Electrode, destinée à être utilisée dans un électrolyseur et électrolyseur ainsi obtenu**

(30) Priorité: 01.08.2008 FR 0804402
(71) Demandeur: Martimort, Olivier, 92100 Boulogne-Billancourt (FR)
(72) Inventeur: Martimort, Olivier, 92100 Boulogne-Billancourt (FR)
(74) Mandataire: Gavin, Pablo

(57) **Abrégé**

La présente invention concerne une électrode (1), destinée à être utilisée dans un électrolyseur, ladite électrode (1) étant du type « zéro gap », comprenant une anode (A) et une cathode (C), une cloison de séparation (3) étant placée entre l'anode (A) et la cathode (C).

L'invention consiste en ce que l'électrode (1) est formée d'un corps en U, ledit corps étant recouvert d'un dépôt mésoporeux nanométallique permettant d'augmenter la surface efficace et chaque électrode étant préformée.

## Description

La présente invention concerne le domaine de la production d'hydrogène par électrolyse alcaline de l'eau. Plus particulièrement, l'invention concerne une électrode permettant d'optimiser la production d'hydrogène par électrolyse alcaline de l'eau et l'électrolyseur incorporant une telle électrode.

Dans le domaine de la production d'hydrogène, l'électrolyse alcaline de l'eau est le procédé propre le mieux adapté sur un plan économique. Cette électrolyse est réalisée grâce à un électrolyseur comprenant un ou deux circuits rempli d'électrolyte (milieu conducteur ionique, dans le cas présent, une solution aqueuse d'hydroxyde de sodium ou d'hydroxyde de potassium) et dans lequel plonge au moins une cellule d'électrolyse comprenant deux électrodes reliées à une alimentation électrique et séparées par ledit électrolyte.

La technique de l'électrolyse sous pression de l'eau est la plus adaptée puisqu'elle évite un dispositif de compression du gaz produit. De plus, la pression contribue à une meilleure conductivité de l'électrolyte par la diminution de la taille des bulles générées.

L'alimentation électrique de l'électrolyseur est fournie par l'électricité du réseau ou de sources d'énergie renouvelables passant à travers un redresseur et l'alimentation en eau se fait à partir d'eau passant au travers d'un élément purificateur.

Actuellement, dans le meilleur des cas, pour augmenter la surface active, les électrodes utilisées sont faites d'un frittage de grains de nickel ou d'alliage de nickel comprimés et agglomérés, c'est-à-dire d'un matériau poreux et grossier. Leur fabrication est donc complexe et chère et nécessite l'utilisation d'une quantité significative de métal.

La technique de l'électrolyse permet de décomposer de l'eau en oxygène et hydrogène selon l'équation chimique suivante :

2H₂O □ 2H₂ + O₂

avec une enthalpie de dissociation de l'eau de : □H = 285 kJ/mole.

L'hydrogène produit peut être purifié pour être stocké, par exemple, dans un réservoir à hydrure métallique, l'oxygène étant, quant à lui, rejeté dans l'atmosphère.

Cette décomposition de l'eau en hydrogène et oxygène nécessite un apport d'énergie électrique dépendant essentiellement de l'enthalpie et de l'entropie de la réaction. Le potentiel théorique de la décomposition est de 1,481 volt à 25°C. Or, les valeurs classiques des potentiels de cellules d'électrolyse industrielles actuelles sont de l'ordre de 1,7 à 2,1 volts, ce qui correspond à des rendements d'électrolyse de 70 à 85%. Quand on travaille au-delà de 1,481 volt à 25°C on est donc en perte de rendement. Ce phénomène de perte de rendement est accentué dans le cas d'électrolyseur dans lequel les électrodes sont relativement éloignées. En effet, plus la distance entre électrodes augmente, plus la chute ohmique dans l'électrolyte est importante. Les électrodes de type « zéro gap » permettent de minimiser la distance entre électrodes mais nécessitent d'évacuer les bulles générées par l'arrière afin de ne pas affecter la conductivité de l'électrolyte.

Les électrodes de type « zéro gap » présentent un côté anode et un côté cathode reliés électriquement, séparés par une cloison empêchant le mélange des gaz produits. Dans une cellule d'électrolyse, deux électrodes de ce type se font face au travers d'un diaphragme ou d'une membrane. Dans ce type d'électrodes, le diaphragme ou la membrane ne doivent ni s'user mécaniquement ni se perforer du fait de points d'appui localisés. Or les solutions apportées jusqu'à présent (ajout de tissu métallique tressé, d'une paille métallique ou de ressorts entre le diaphragme et les électrodes) pour permettre un contact doux entre électrode et diaphragme (ou membrane) ont pour inconvénients des pertes ohmiques entre les électrodes et les tissus ou pailles métalliques, ainsi que la tendance de ces tissus ou pailles à retenir les bulles de gaz.

De même, dans les électrodes de type « zéro gap », le contact électrique entre les côtés anode et cathode d'une même électrode doit être assuré. Or, les solutions apportées (rivets ou boulonnages reliant chaque face à la cloison de séparation elle-même métallique) présentent l'inconvénient d'être chères et de piètre qualité pour la conductivité électrique.

Dans un domaine voisin, celui des piles à combustibles, il est connu d'utiliser pour la fabrication des électrodes les nanomatériaux, ou matériaux mésoporeux. Toutefois, les problématiques sont totalement différentes entre le domaine des piles à combustible et celui des électrolyseurs. En effet, dans le domaine des piles à combustible, on part de gaz pour former de l'eau, la pénétration du gaz au travers du matériau mésoporeux formant l'électrode étant aisée et non agressive.

L'invention se propose d'améliorer le rendement des électrolyseurs ainsi que palier aux inconvénients cités précédemment grâce à de nouvelles électrodes.

L'électrode de l'invention, destinée à être utilisée dans un électrolyseur, est du type « zéro gap », c'est-à-dire comprenant une anode et une cathode reliées électriquement, une cloison de séparation étant placée entre l'anode et la cathode, l'électrode étant formée d'un corps en U, recouvert d'un dépôt mésoporeux nanométallique permettant d'augmenter la surface efficace et chaque électrode étant préformée.

L'électrode est donc formée d'un corps sur lequel un colloïde, formé à partir de précurseurs organométalliques, est déposé par bain ou vaporisation puis séché en présence d'un tensioactif afin d'obtenir soit une structure organisée soit des nano fils métalliques formant respectivement une mousse ou un « velours », de type mésoporeux.

Un dépôt de 1 g de matériau mésoporeux permet de réaliser une surface efficace allant jusqu'à 300 m² suivant la méthode de dépôt du matériau mésoporeux et le tensioactif.

Le dépôt nanométallique mésoporeux permet d'obtenir une surface efficace de plusieurs dizaines de mètres carrés pour chaque gramme déposé sur l'anode et la cathode ce qui permet de générer une quantité de gaz importante en fonctionnant à proximité de la tension thermo-neutre. Dans l'art antérieur, les électrodes planaires traditionnelles nécessitent une tension de fonctionnement très supérieure à la tension thermo-neutre et cette surtension est une perte qui affecte directement le rendement. L'utilisation de métaux rares faisant office de catalyseur permet d'abaisser la tension de fonctionnement mais leur coût est important et leurs ressources limitées. L'utilisation d'un dépôt mésoporeux nanométallique hydrophile permet d'atteindre un très haut rendement sans utiliser de métaux rares.

L'utilisation de matériau mésoporeux permet donc d'augmenter la surface utile de l'électrode d'où une densité de courant très faible vis-à-vis de cette surface utile. Par conséquent, on peut travailler à proximité de la tension théorique (tension thermo neutre) de 1,481 volt tout en maintenant une production de bulles consistante. Ainsi, le rendement de l'électrolyse s'en trouve augmenté.

Le fait de fonctionner à proximité de la tension thermo neutre apporte plusieurs avantages :
- Meilleur rendement
- Moins d'échauffement lié aux pertes
- Possibilité de s'affranchir d'échangeurs thermique pour les circuits d'électrolyte.
- Possibilité de s'affranchir d'échangeurs thermique pour les gaz produits.
- Diminution de la vaporisation de l'électrolyte dans les gaz produits.
- Temps de mise en route plus rapide, compatible avec des sources d'énergies renouvelables (pas de temps de montée en température).
- Utilisation de matériaux moins onéreux tant pour la structure des cellules, des séparateurs, des périphériques que pour les électrodes.
- Moindre vieillissement des matériaux.
- Moins de risque de fuite d'électrolyte lié aux dilatations thermiques.

L'invention concerne également un électrolyseur comprenant au moins une cellule d'électrolyse formée de deux électrodes telles que définies selon l'invention, séparées par un diaphragme ou une membrane.

De préférence, les électrodes sont plaquées contre le diaphragme ou la membrane, du fait de leur préformage.

De préférence, l'électrode est intégrée dans une demi-cellule d'électrolyse en polymère injecté réalisée par des surmoulages successifs, le diaphragme ou la membrane étant aussi intégré dans un surmoulage en polymère injecté, pour constituer par assemblage une cellule d'électrolyse.

Dans une forme d'exécution particulière de l'invention, le moulage de l'électrode est fait d'un polymère injectable ou extrudable. Ce type de moulage permet de réduire le coût.

De manière avantageuse, la structure de la cellule en polymère injectable ou extrudable intègre des segments de séparateurs.

Dans un mode de réalisation particulier de l'électrolyseur de l'invention, celui-ci présente en outre au moins un diaphragme indépendant des cellules d'électrolyse.

Dans l'art antérieur, les électrolyseurs présentant des circuits anolyte et catholyte séparés, comportent un minidégazeur ou miniséparateur permettant de rééquilibrer les concentrations entre circuits d'anolyte et de catholyte. L'électrolyseur de l'invention ne comprend pas de minidégazeur mais un diaphragme ne faisant pas partie des cellules d'électrolyse. Ainsi, le passage de l'électrolyte par ce diaphragme évite que les gaz en suspension dans l'électrolyte ne se mélangent. Contrairement au diaphragme des cellules qui doivent être le plus mince possible pour minimiser la résistance ohmique entre électrodes, le diaphragme d'équilibrage est nettement plus épais pour résister à des différences de pression et des débits plus importants.

Ainsi, de manière avantageuse, chaque face d'une électrode selon l'invention est préformée de sorte à présenter une cambrure, ce qui permet ainsi d'exercer une pression uniforme sur le diaphragme ou la membrane, situé au centre d'une cellule d'électrolyse. La cambrure de l'électrode dépend de l'épaisseur de celle-ci et de sa flexibilité. Une fois les électrodes assemblées, leurs cambrures se faisant face, elles s'aplanissent contre le diaphragme (ou la membrane) en le maintenant en place. L'utilisation d'un dépôt nanométallique mésoporeux permet l'utilisation d'électrode de petite taille (environ 30 cm² pour 4kW/h) ce qui permet de maîtriser la précision des cambrures. La partie haute du U de l'électrode est laissée libre afin que l'aplanissement de la cambrure puisse se traduire en élongation.

Le diaphragme de séparation est une membrane hydrophile disposée entre l'anode et la cathode au sein d'une cellule d'électrolyse et séparant les bulles d'hydrogène des bulles d'oxygène tout en permettant le passage des ions. Placer les deux électrodes contre ce diaphragme ou cette membrane permet à toutes les bulles générées d'être évacuées par l'arrière des électrodes, c'est-à-dire entre l'électrode et la cloison de séparation, bulles qui ne peuvent plus se retrouver dans l'interstice situé entre les deux électrodes puisqu'il n'existe plus.

De manière avantageuse, le corps de l'électrode peut être une grille en métal déployé et laminé, un tissu en fibres métalliques tressées, ou un substrat perforé fait à partir de polymère.

Cette grille en métal déployé et laminé peut être faite de métal conducteur comme du fer doux ou du nickel voire de l'acier inoxydable ou du fer avec des plaquages différents sur chaque face si nécessaire.

Ledit corps peut également être un substrat métallique perforé réalisée en forme de U assurant ainsi la conduction électrique entre le coté anode et cathode.

Lorsque le corps de l'électrode est un substrat perforé en polymère, des barreaux conducteurs sont alors placés en périphérie de la cloison de séparation, le dépôt mésoporeux nanométallique recouvrant alors le corps de l'électrode mais aussi la surface découverte des barreaux pour assurer la conduction entre anode et cathode.

Les électrodes de l'invention sont inoxydables comme les électrodes de l'art antérieur.

Dans un mode de réalisation particulier, le dépôt mésoporeux sur l'électrode est hydrophile.

Le fait d'être hydrophile est important car au cours de l'électrolyse le milieu liquide alcalin doit pénétrer dans le matériau mésoporeux, ce qui se fait notamment par interactions hydrophiles. L'hydrophilie du matériau mésoporeux peut être réalisée en diminuant sa tension de surface et des moyens envisagés pour réaliser cette hydrophilie sont la capacité à créer des liaisons hydrogène avec les molécules d'eau grâce à la polarisation négative de son oxyde avec l'atome d'hydrogène de l'eau et à la polarisation positive d'un atome de surface avec l'atome d'oxygène de l'eau. Cette caractéristique peut être obtenue grâce au bon usage de surfactant lors de la structuration du dépôt mesoporeux.

Dans une forme d'exécution particulière de l'électrode de l'invention, celle-ci présente un dépôt homogène du matériau mésoporeux tant pour la taille des pores ou des fils que pour l'épaisseur. Cette homogénéité peut être réalisée par l'utilisation d'un aérosol ionisé. Il est important que l'électrode présente une homogénéité de dépôt car cela assure une meilleure homogénéité de la densité de courant, donc un meilleur rendement.

Dans un mode de réalisation particulier de l'invention, l'électrode présente des perforations. Classiquement, l'évacuation des bulles d'hydrogène et d'oxygène est assurée par la circulation de l'électrolyte à la surface de l'électrode. Il est à noter que la température de fonctionnement et la concentration de l'électrolyte contribuent à l'optimisation de la tension de surface des bulles et donc à l'évacuation de ces bulles. Toutefois, dans le cadre de l'invention, l'utilisation de matériau mésoporeux présente comme avantage d'augmenter la production de bulles mais également comme inconvénient que la quantité de bulles devient tellement importante qu'elle finit par entraîner une baisse du rendement due à un défaut de passage du courant. Il est donc nécessaire, lorsque l'on utilise une électrode recouverte d'un dépôt de matériau mésoporeux d'améliorer l'évacuation desdites bulles. Dans un mode de réalisation particulier de l'invention, les électrodes présentent donc des perforations importantes. Ces perforations ont pour avantage de permettre l'évacuation des bulles par l'arrière, c'est-à-dire entre l'anode ou la cathode et la cloison de séparation, sans affecter la conductivité. Ces perforations permettent également l'injection de l'électrolyte en retrait, c'est-à-dire entre l'anode ou la cathode et la cloison de séparation et donc de pouvoir plaquer les électrodes contre le diaphragme ou la membrane de la cellule d'électrolyse, le maintien mécanique du diaphragme ou de la membrane très mince, évitant les déchirures en cas de variation de pression importante entre anolyte et catholyte, c'est-à-dire en cas d'éclatement ou de regroupement de bulles et de déséquilibre de niveau trop important entre les séparateurs.

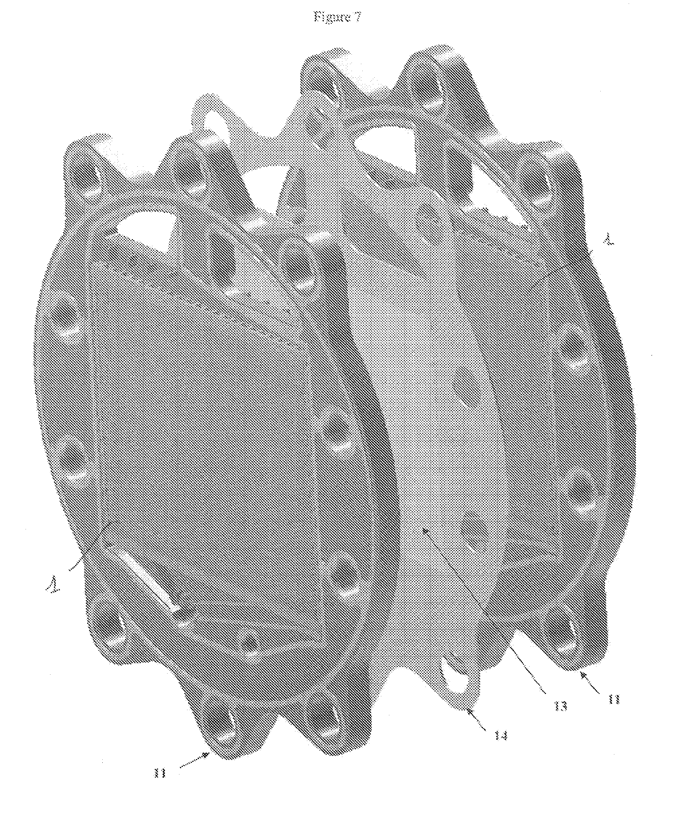

Des modes de réalisation de l'invention vont maintenant être décrits par référence aux dessins annexés, dans lesquels :
La figure 1 représente une vue en plan d'un corps destiné à constituer une électrode selon l'invention ;
La figure 2 représente une vue en perspective du dessus du corps de la figure 1 muni d'une cloison de séparation après surmoulage sur celle-ci ;
La figure 3a représente une vue en perspective après pliage de l'électrode sur la cloison ;
La figure 3b représente l'électrode de la figure 3a dans laquelle la cloison a été retirée et qui fait apparaître la forme en U ;

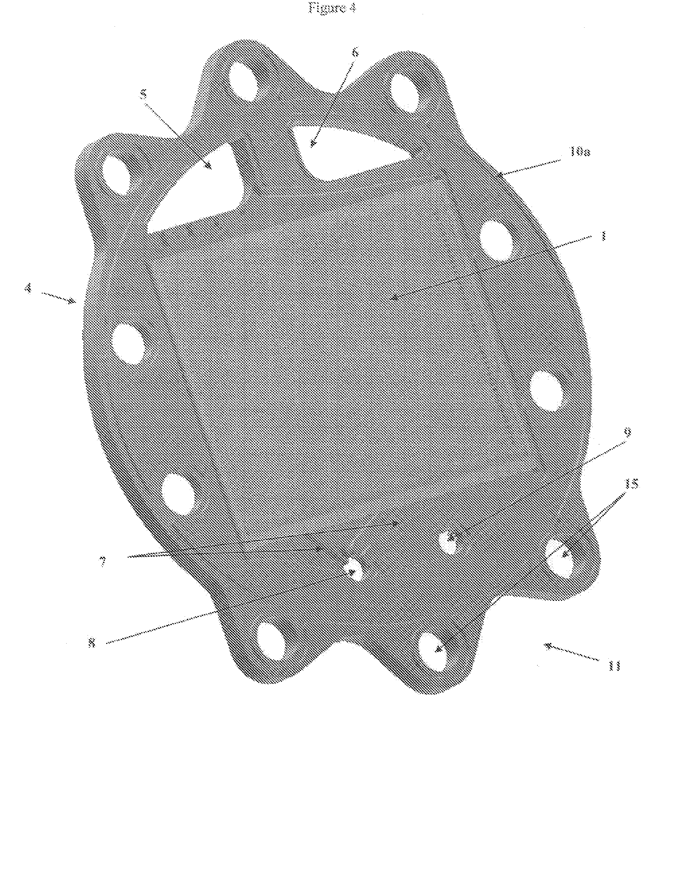

La figure 4 représente une demi-cellule d'électrolyse réalise par surmoulage du corps de la figure 2
La figure 5 représente la demi-cellule de la figure 4 munie d'un joint surmoulé

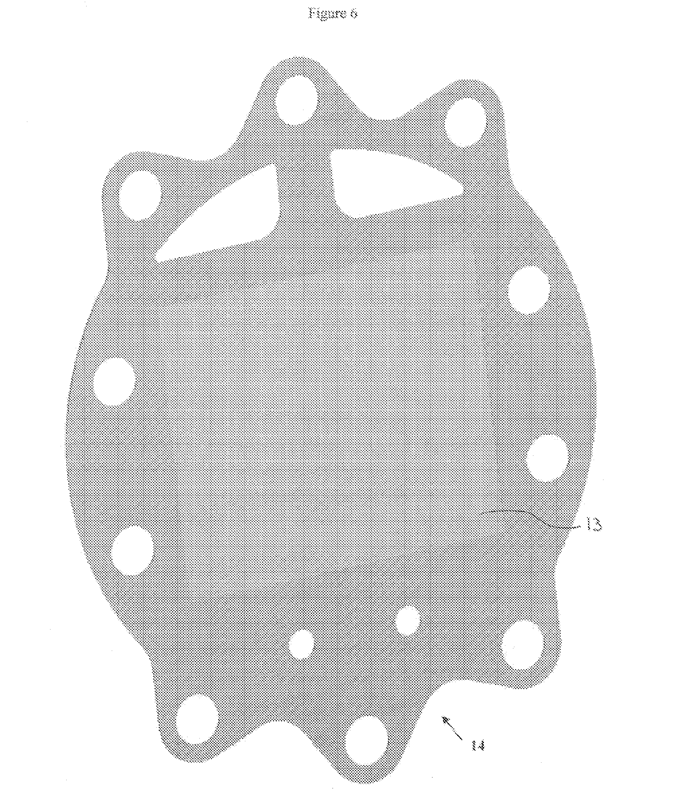

La figure 6 représente une vue en plan d'un diaphragme ou d'une mebrane d'une cellule d'électrolyse après surmoulage ;
**La** **figure 7** **représente une vue en perspective éclatée d'une cellule d'électrolyse complète ;**

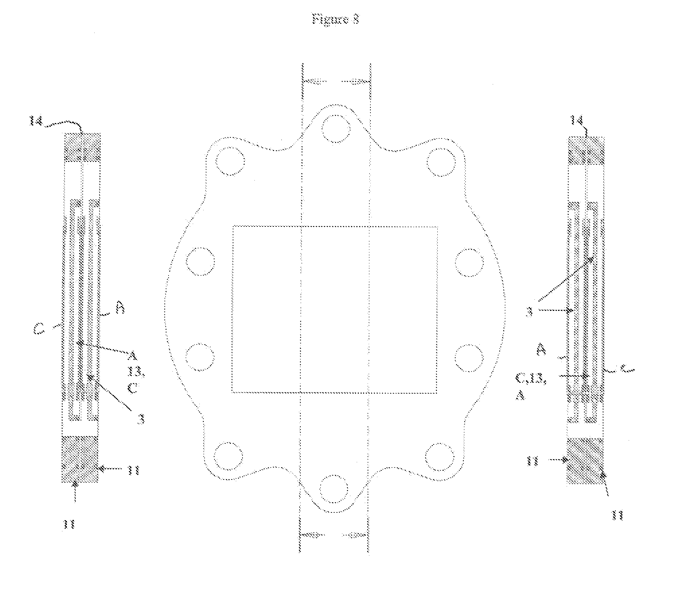

La figure 8 représente une vue schématique en coupe d'une cellule selon la figure 7 ;
La figure 9 représente une vue schématique d'une variante de la figure 5 qui intègre des tranches de séparateurs
La figure 10 représente un diagramme de la tension par cellule en fonction de la densité de courant.

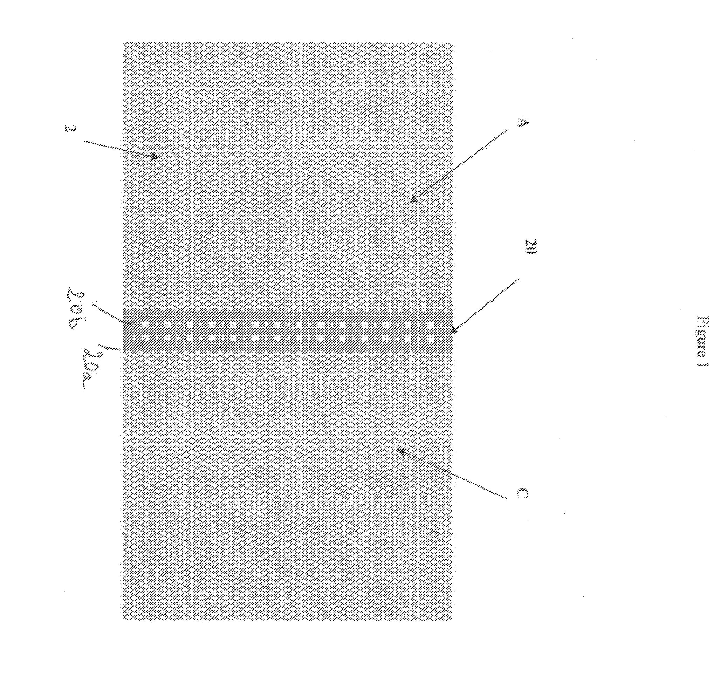

Comme on peut le voir à la figure 1, une électrode 1 selon l'invention comprend une anode A et une cathode C reliés électriquement, une cloison de séparation 3 étant placée entre l'anode A et la cathode C. Cette électrode 1 est formée d'un corps 2 qui sera formé en U, tel qu'une grille perforée en métal déployé laminé puis recouverte d'un dépôt mésoporeux d'un côté pour l'oxydation formant l'anode A et de l'autre côté pour la réduction formant la cathode C.

Le dépôt méso poreux qui recouvre l'électrode est adaptable dans sa composition au coté anode et coté cathode pour tenir compte des couples redox oxydant et réducteur.

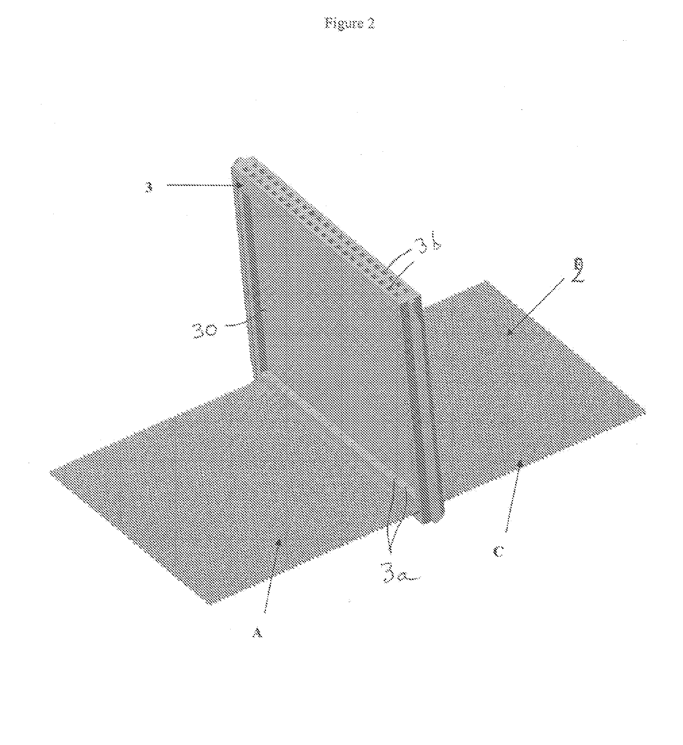

La partie centrale 20 de la grille 2 n'est pas déployée ce qui permet d'injecter une pièce en polymère formant la cloison de séparation 3 comme on peut le voir à la figure 2. La partie centrale 20 de la grille dispose de deux types de trous, ceux 20a permettant la liaison de la future pièce en polymère 3 qui sera surmoulée autour de la partie centrale 20 de l'électrode et ceux 20b permettant le passage de l'électrolyte par la suite dans l'électrode formée.

Cette pièce en polymère est visible sur la figure 2 et forme la cloison 3 qui permet d'assurer la séparation des gaz générés et dispose sur chaque face de trous 3a permettant l'amenée de l'électrolyte et d'orifices 3b permettant l'évacuation de celui-ci et des gaz générés.

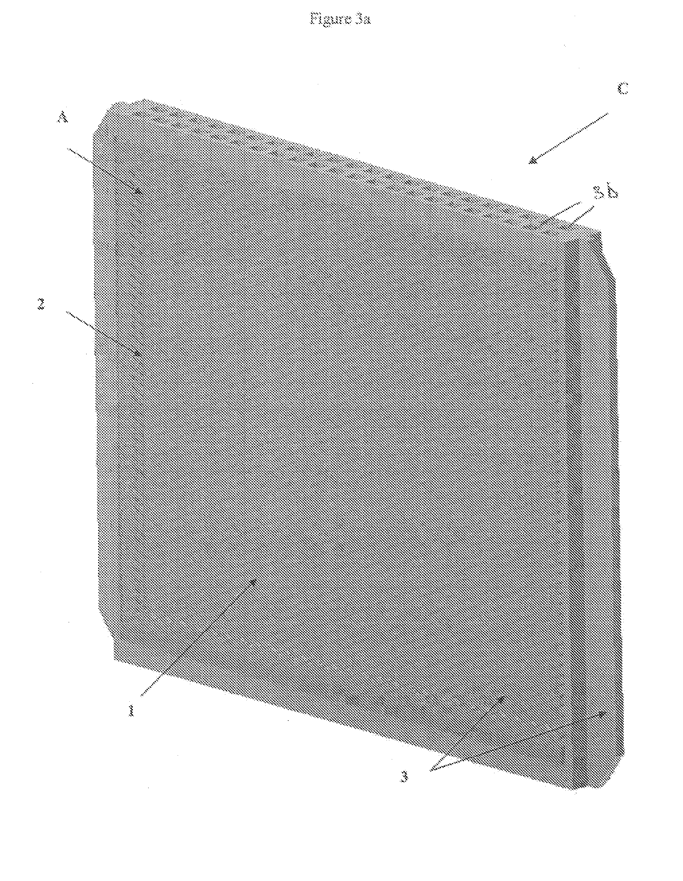

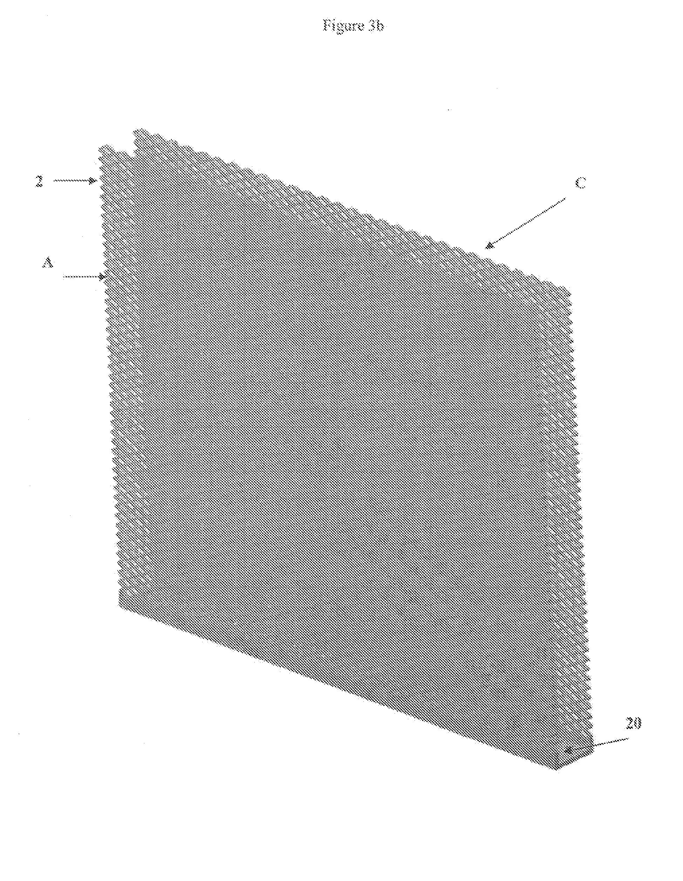

Une fois, la cloison de séparation 3 surmoulée sur la grille 2, on rabat la grille 2 en forme de U (cf. figure 3b) contre la cloison 3 centrale. Chaque face de la cloison 3 présente un renfoncement, définissant ainsi un espace 30 respectivement derrière l'anode A et la cathode C dans la partie inférieure duquel débouche les trous 3a d'amenée de l'électrolyte et dans la partie supérieure duquel se trouvent les orifices 3b permettant l'évacuation des gaz générés et de l'électrolyte.

Une fois, l'électrode ainsi formée, on met en place autour de celle-ci, un cadre 4 en polymère qui est surmoulé autour de la cloison centrale 3 elle même surmoulée sur l'électrode en forme de U pour constituer une demi-cellule 11.

Ce cadre 4 permet également de définir le circuit d'anolyte sortant 5, le circuit de catholyte sortant 6, un système de distribution homogène de l'électrolyte 7 permettant une répartition homogène de l'électrolyte au niveau de chaque anode A et cathode C, le circuit d'anolyte entrant 8 et le circuit de catholyte entrant 9 ainsi que des orifices de serrage 15 permettant d'assembler des demi-cellules 11 et un diaphragme ou une membrane pour former une cellule d'électrolyse.

On notera que les diamètres des circuits d'anolyte 8 et de catholyte entrant 9 sont beaucoup plus étroits que pour les circuits sortants 5, 6 afin de minimiser les courants parasites entre cellules. En effet les circuits sortants sont chargés de gaz ce qui prend plus de volume et rend l'électrolyte moins conducteur.

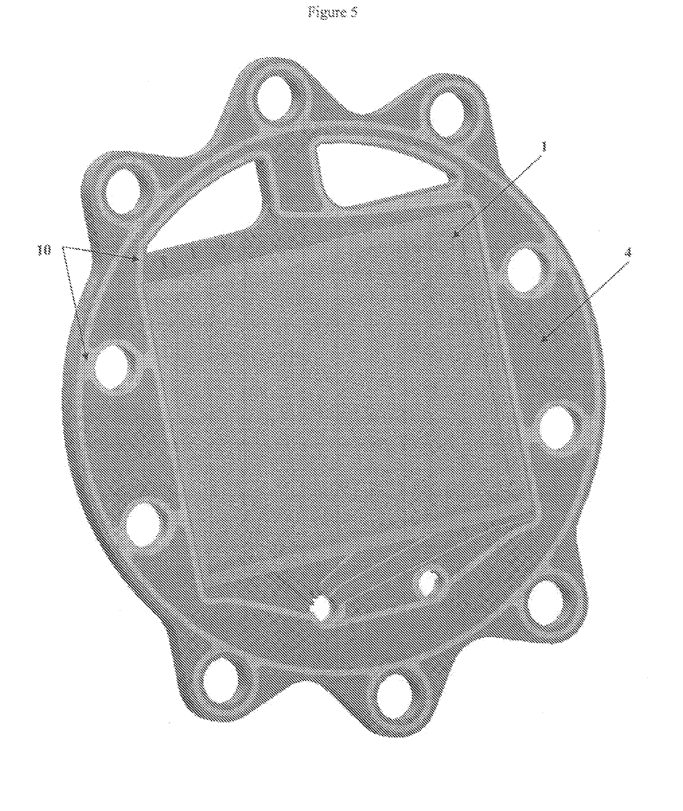

A la figure 5, on peut voir le corps de la demi-cellule 11 pourvu d'un joint 10 en élastomère surmoulé, tel que du butyle ménagé dans une rigole 10a du cadre 4.

Pour former une cellule d'électrolyse 12, on met en place deux demi-cellules 11 de part et d'autre d'un diaphragme 13 ou d'une membrane, enfermé également dans un cadre en polymère 14 surmoulé de forme similaire au cadre 4 d'une demi-cellule 11. Chaque cathode C et anode A d'une demi-cellule a été préformée pour présenter une cambrure qui permet de venir en appui sur le diaphragme 13 ou la membrane de la cellule d'électrolyse.

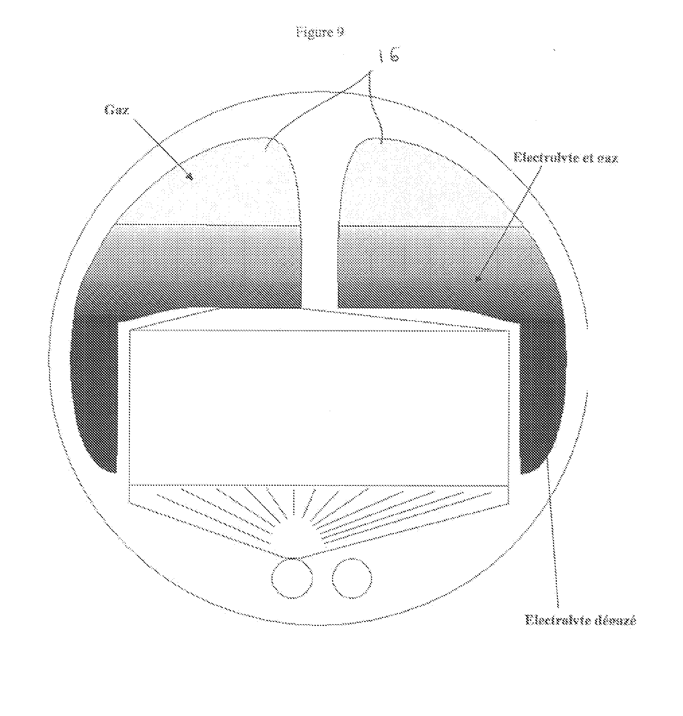

On peut voir à la figure 9, le principe de fonctionnement d'une cellule électrolytique avec séparateur intégré 16. L'intégration des séparateurs 16 au niveau de la structure de la cellule permet d'éviter des raccords et conduits vers des séparateurs externes et réduit le coût de ces séparateurs.

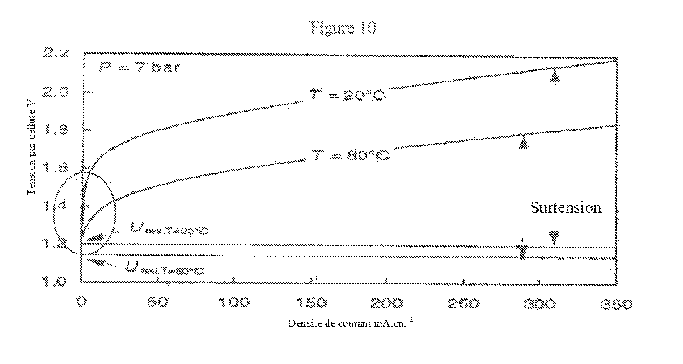

Le diagramme de la figure 10 permet de vérifier que la tension de fonctionnement obtenue grâce à l'usage d'un dépôt mésoporeux sur les électrodes de la cellule électrolytique permet en multipliant la surface efficace de manière significative de réduire la densité de courant et de se rapprocher de la tension thermoneutre, ce qui permet d'éviter de travailler à haute température.

L'invention n'est bien entendu pas limitée aux exemples donnés mais intègre également les variantes définies.

L'invention a des applications dans le domaine de la production du chlore par électrolyse mais aussi de l'aluminium et toute sorte d'électrolyses mettant en oeuvre des électrodes.

## Revendications

1. Electrode (1), destinée à être utilisée dans un électrolyseur, ladite électrode (1) étant du type « zéro gap », comprenant une anode (A) et une cathode (C), une cloison de séparation (3) étant placée entre l'anode (A) et la cathode (C),
**caractérisée en ce que** l'électrode (1) est formée d'un corps en U, ledit corps étant recouvert d'un dépôt mésoporeux nanométallique permettant d'augmenter la surface efficace et chaque électrode étant préformée et **en ce que** ledit corps présente des perforations ou orifices destinés à évacuer les bulles générées.

2. Electrode selon la revendication 1,
**caractérisée en ce que** le dépôt méso poreux qui recouvre l'électrode (1) est adaptable dans sa composition au coté anode et coté cathode pour tenir compte des couples redox oxydant et réducteur.

3. Electrode selon la revendication 1,
**caractérisée en ce que** ledit corps est réalisable à partir d'une grille (2) en métal déployé et laminé, d'un tissu en fibres métalliques tressée, d'un substrat perforé fait à partir de polymères.

4. Electrode selon la revendication 1,
**caractérisée en ce que** ledit corps est un substrat métallique perforé réalisée en forme de U assurant ainsi la conduction électrique entre le coté anode et cathode.

5. Electrode selon la revendication 3,
**caractérisé en ce que**, lorsque le substrat est en polymère, des barreaux conducteurs sont placés en périphérie de la cloison de séparation pour assurer la conduction électrique entre le coté anode et cathode.

6. Electrode selon l'une quelconque des revendications précédentes, **caractérisée en ce que** le dépôt mésoporeux nanométallique est hydrophile.

7. Electrode selon l'une quelconque des revendications précédentes,
**caractérisée en ce que** le dépôt mésoporeux nanométallique est homogène.

8. Electrode selon l'une quelconque des revendications précédentes, **caractérisée en ce qu'**elle est perforée.

9. Electrolyseur comprenant au moins une cellule d'électrolyse formée de deux électrodes, telles que définies selon l'une quelconque des revendications précédentes, séparées par un diaphragme ou une membrane.

10. Electrolyseur selon la revendication 9,
**caractérisé en ce que** les électrodes sont plaquées contre le diaphragme ou la membrane.

11. Electrolyseur selon la revendication 9,
**caractérisé en ce que** les électrodes sont intégrées dans une demie cellule d'électrolyse en polymère injecté réalisée par des surmoulages successifs et le diaphragme (ou la membrane) étant aussi intégré dans la cellule par surmoulage en polymère injecté.

12. Electrolyseur selon la revendication 9,
**caractérisé en ce qu'**il comprend, en outre, un diaphragme ne faisant pas partie des cellules d'électrolyse et qui contribue à l'équilibre entre les circuits d'anolyte et de catholyte.

13. Electrolyseur selon la revendication 12,
**caractérisé en ce que** la structure de la cellule en polymère injectable ou extrudable intègre des segments de séparateurs.
